# EUROPÄISCHE PATENTSCHRIFT

(11) **EP 0 405 258 B1**
(45) Veröffentlichungstag und Bekanntmachung des Hinweises auf die Patenterteilung: **03.11.1993**
(21) Anmeldenummer: 90111374.6
(22) Anmeldetag: 16.06.1990
(51) Int. Cl.: H02K 29/00, H02K 1/18

(54) **Rotatorische elektrische Maschine**
Rotary electric machine
Machine électrique rotative

(30) Priorität: 24.06.1989 DE 3920817
(43) Veröffentlichungstag der Anmeldung: 02.01.1991
(73) Patentinhaber: Asea Brown Boveri Aktiengesellschaft, 68309 Mannheim (DE)
(72) Erfinder: Weber, Norbert, D-6730 Neustadt 22 (DE); Fischl, Rolf, D-6842 Bürstadt (DE); Knaf, Harald, D-6944 Absteinach (DE)
(74) Vertreter: Rupprecht, Klaus, Dipl.-Ing.

(56) Entgegenhaltungen:
- EP-A- 0 094 978
- CH-A- 417 749
- CONTROL ENGINEERING, Bd. 29, Nr. 12, November 1982, Illinois,US;Seite 22: "Hall Effect Sensors Eliminate Motor Commutator, Brushes"
- PATENT ABSTRACTS OF JAPAN, Bd. 9, Nr. 284 (E-357)(2007) 12 November 1985;& JP-A-60 125159

## Beschreibung

Die Erfindung bezieht sich auf eine rotatorische elektrische Maschine mit einem Stator und einem Rotor, die durch einen Luftspalt voneinander getrennt sind, wobei der Rotor eine Vielzahl von Dauermagnetpolen in abwechselnder Polung trägt und der Stator eine Vielzahl von Elektromagnetpolen mit schaltbaren Elektromagnetwicklungen trägt.

Eine derartige elektrische Maschine ist aus der EP-OS 0 094 978 bekannt. Diese bekannte Elektromaschine besteht aus einem zylindrischen Rotor und einem zylindrischen Stator, wobei der Rotor den Stator umgibt. Der Rotor enthält eine Vielzahl von ringförmig verteilten Dauermagnetpolen, während der Stator eine Vielzahl von ringförmig verteilten, schaltbaren Elektromagnetpolen aufweist. Die Zahl der Dauermagnetpole entspricht der Zahl der Elektromagnetpole. Zur Schaltung der Elektromagnetpole jeweils in der richtigen Stromrichtung für die Zeitdauer der funktionsgeeigneten Gegenüberstellung eines Dauermagnetpoles ist mindestens eine Schalteinrichtung vorgesehen, die von mindestens einem die Verdrehung des Rotors gegenüber dem Stator erfassenden Sensor gesteuert wird.

Der Aufbau dieser bekannten elektrischen Maschine ist an sich nicht kompliziert. Da jedoch der Rotor außen liegt, muß noch ein zusätzlicher Gehäusemantel als Schutz vorgesehen werden. Hierdurch wird das Gesamtvolumen der bekannten elektrischen Maschine größer. Außerdem ist der Zugang zu den Elektromagnetpolen für Reparaturarbeiten äußerst schwierig, da fast immer der außenliegende Rotor zunächst entfernt werden muß.

Es ist daher Aufgabe der Erfindung, eine kompaktere elektrische Maschine zu schaffen, bei der außerdem der Zugang für Reparaturen und für Wartungsarbeiten wesentlich einfacher ist.

Gelöst wird diese Aufgabe gemäß der Erfindung dadurch, daß der Stator aus einzelnen Statorelementen zusammengesetzt ist, wobei als Träger für jedes Statorelement auf an beiden Motorseiten angeordneten Flanschen mit gleichem Durchmesser befestigt und an den Trägern radial nach innen je zwei Blechpaketpole mit den zugehörigen Polwicklungen und radial nach außen zeigende Stege angeordnet sind.

Zweckmäßigerweise wird jeder Statorbaueinheit eine Leistungselektronik-Baueinheit zugeordnet, die in axialer Richtung, vorzugsweise auf der Abtriebsseite, angeordnet ist.

In den Figuren ist ein Ausführungsbeispiel der Erfindung dargestellt.

Es zeigen:
- Figur 1: Einen Schnitt entlang der Längsachse gemäß der Linie I-I in Figur 2,
- Figur 2: eine Ansicht auf die Stirnseite des Motors,
- Figur 3: einen Querschnitt durch die Stator- und Rotorpole und
- Figur 4: eine perspektivische Ansicht auf den Stator.

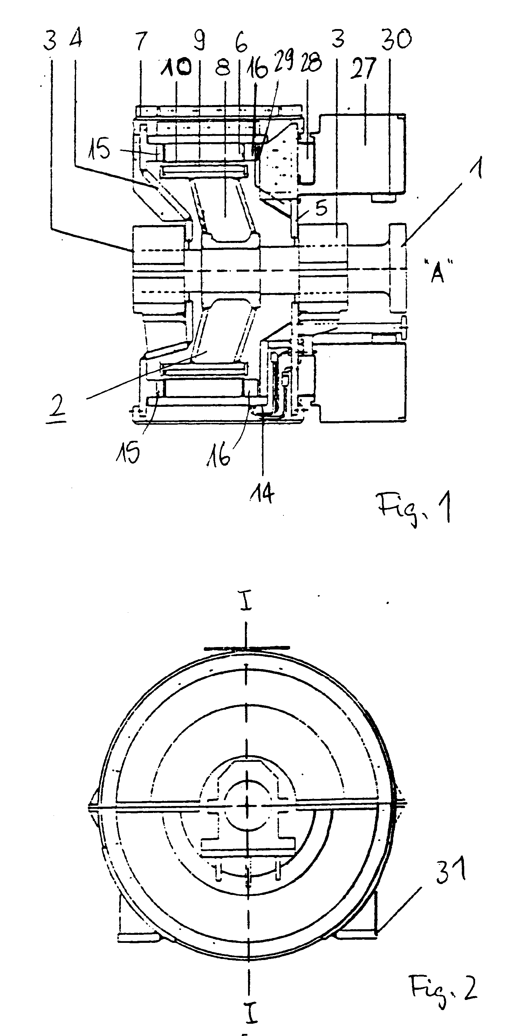

Figur 1 zeigt einen Schnitt durch den Motor gemäß der Erfindung. In zwei Lagern 3 ist eine Welle 1, die einen Rotor 2 trägt, gelagert. Die Lager 3 sind in den zwei Gehäusedeckeln 4 und 5 angeordnet. Diese Gehäusedeckel 4 und 5 sind mit einem Stator 6 und einem den Stator 6 umgebenden Gehäusemantel 7 verbunden.

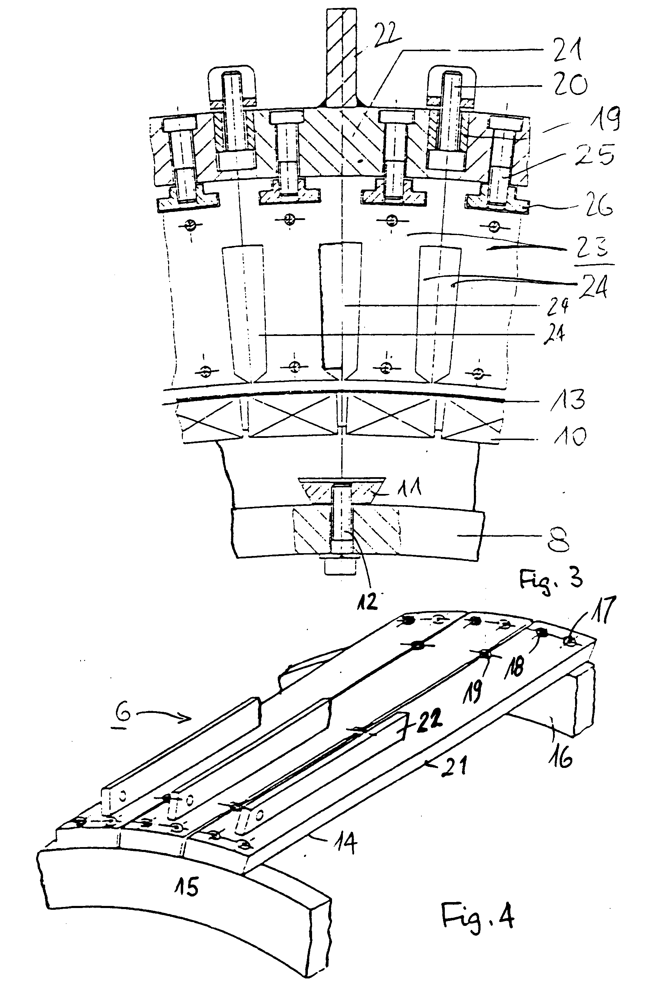

Der Rotor 2 besteht, wie auch Figur 3 zeigt, aus einer Rotornabe 8, Rotorblechen 9 und Permantmagneten 10. Die Rotorbleche 9 sind mittels Keilen 11 und Schrauben 12 gegen die Rotornabe 8 verspannt. Die an dem Rotorblech 9 durch Kleben befestigten Permanentmagnete 10 werden noch zusätzlich durch eine Bandage 13 gehalten.

Der Stator 6 besitzt einzelne Statorelemente 14, die als Flacheisen ausgebildet sind. Für die Befestigung der Statorelemente 14 sind an dem Gehäusemantel 7 Flansche 15 und 16 vorgesehen. Mittels Spannhülsen 17 und Schrauben 18 werden die Statorelemente 14 an den Flanschen 15 und 16 befestigt. Gegeneinander werden die einzelnen Statorelemente über Spannhülsen 19 und Schrauben 20 verspannt.

Gemäß Figur 3 sind ferner an jedem Flacheisen 21 radial nach innen zwei Blechpakete 23 befestigt, in denen jeweils ein Wicklungsraum 24 zur Aufnahme einer nicht näher dargestellten Spule und zur Aufnahme von ebenfalls nicht dargestellten Kühlrohren vorgesehen ist.

Figur 4 zeigt eine perspektivische Teilansicht des Stators 6 mit einzelnen Statorelementen 14, die an den Flanschen 15 und 16 anschließen.

Die bereits erwähnten Flacheisen 21 dienen jeweils als Tragelement der Statorelemente 14 mit einem nach außen auf dem Flacheisen angeordneten Steg 22, der radial nach außen zeigt und dessen Längsrichtung parallel zur Achsrichtung des Motors verläuft. In Figur 4 sind die Stege nur teilweise dargestellt.

Auf der Abtriebsseite A des Motors sind über dem Lager 3 die Leistungselektronikbaueinheiten 27 angeordnet, wobei jeweils einem Statorelement 14 eine Leistungselektronikbaueinheit 27 zugeordnet ist. Jede Leistungselektronikbaueinheit 27 ist mit dem zugeordneten Statorelement 14 elektrisch verbunden. Bei einer erforderlichen Reparatur werden Statorelement 14 und zugehörender Leistungselektronikbaustein 27 gemeinsam aus dem Stator herausgehoben und können, falls erforderlich, durch gleichwertige Einheiten ersetzt werden. Ein gemeinsames Kühlwassersystem 28, 29 ist für die Leistungselektronikbaueinheiten und die Statorelemente vorgesehen. An jedem Leistungselektronikbaustein 27 ist ein elektrischer Anschluß 30 für die Stromversorgung und die Verbindung mit Meßstellen vorgesehen. Zum Aufstellen und Befestigen des Motors sind Montagefüße 31 vorgesehen.

## Patentansprüche

1. Rotatorische elektrische Maschine mit einem Stator (6) und einem Rotor (2), die durch einen Luftspalt voneinander getrennt sind, wobei der Rotor eine Vielzahl von Dauermagnetpolen (10) in abwechselnder Polung trägt und der Stator eine Vielzahl von Elektromagnetpolen mit schaltbaren Elektromagnetwicklungen trägt, dadurch gekennzeichnet, daß der Stator (6) aus einzelnen Statorelementen (14) zusammengesetzt ist, wobei als Träger (21) für jedes Statorelement (14) Flacheisen (21) auf an beiden Motorseiten angeordneten Flanschen (15, 16) mit gleichem Durchmesser befestigt und an den Trägern (21) radial nach innen je zwei Blechpaketpole (23) mit den zugehörigen Polwicklungen und radial nach außen zeigende Stege (22) angeordnet sind.

2. Rotatorische elektrische Maschine nach Anspruch 1, dadurch gekennzeichnet, daß die Träger (21) der Statorelemente (14) dem Durchmesser der Flansche angepaßt sind.

3. Rotatorische elektrische Maschine nach Anspruch 1, dadurch gekennzeichnet, daß jedem Statorelement (14) ein Leistungselektronikbaustein (27) zugeordnet ist, der in axialer Richtung angeordnet ist.

4. Rotatorische elektrische Maschine nach Anspruch 3, dadurch gekennzeichnet, daß der Leistungselektronikbaustein (27) in axialer Richtung auf der Abtriebsseite (A) des Motors angeordnet ist.

## Claims

1. Rotary electrical machine having a stator (6) and a rotor (2) which are separated from one another by an air gap, the rotor carrying a large number of permanent magnet poles (10) of alternating polarity and the stator carrying a large number of electromagnet poles having switchable electromagnet windings, characterised in that the stator (6) is composed of individual stator elements (14), in which for each stator element (14) flat iron elements (21) are mounted as carrier (21) on flanges (15, 16) which are arranged on both sides of the motor and have the same diameter, and in each case two laminate stack poles (23), with the associated pole windings, are arranged radially inwards, and webs (22) pointing radially outwards are arranged on the carriers (21).

2. Rotary electrical machine according to Claim 1, characterised in that the carriers (21) of the stator elements (14) are matched to the diameter of the flanges.

3. Rotary electircal machine according to Claim 1, characterised in that a power electronics module (27), which is arranged in the axial direction, is allocated to each stator element (14).

4. Rotary electrical maching according to Claim 3, characterised in that the power electronics module (27) is arranged in the axial direction on the output drive side (A) of the motor.

## Revendications

1. Machine tournante électrique comportant un stator (6) et un rotor (2) qui sont séparés l'un de l'autre par un entrefer, le rotor portant une pluralité de pôles d'aimant permanent (10) avec des polarités disposées en alternance et le stator portant une pluralité de pôles d'électro-aimants avec des enroulements commutables, caractérisé par le fait que le stator est constitué d'éléments de stator (14) séparés, des fers plats (21) étant fixés, en tant que support (21) de chaque élément de stator (14), sur des flasques (15, 16) de même diamètre disposés des deux côtés du moteur et les supports (21) portant respectivement deux pôles (23) formés de paquets de tôles, orientés radialement vers l'intérieur, et des barrettes (22) orientées radialement vers l'extérieur.

2. Machine tournante électrique selon la revendication 1, caractérisée par le fait que les supports (21) des éléments de stator (14) sont adaptés au diamètre des flasques.

3. Machine tournante électrique selon la revendication 1, caractérisée par le fait qu'à chaque élément de stator (14) est associé un module électronique de puissance (27) qui est disposé dans la direction axiale.

4. Machine tournante électrique selon la revendication 3, caractérisée par le fait que le module électronique de puissance (27) est disposé dans la direction axiale, côté sortie de puissance (A) du moteur.
